# EUROPEAN PATENT APPLICATION

(11) **EP 0 999 553 A1**
(43) Date of publication of application: **10.05.2000**
(21) Application number: 99830690.6
(22) Date of filing: 02.11.1999
(51) Int. Cl.: G11B 27/00, G10H 1/00, G11B 27/10, G11B 31/00, G11B 19/02, G11B 19/26, G11B 20/10, G11B 27/034, G11B 27/11, G07F 17/16, H04H 1/02

(54) **Portable apparatus for storing, handling and listening to pieces of music**

(30) Priority: 02.11.1998 IT LT980015
(71) Applicant: Cortellesi, Alessandro, 00042 Roma (IT)
(72) Inventor: Cortellesi, Alessandro, 00042 Roma (IT)
(74) Representative: Sarpi, Maurizio

(57) **Abstract**

An apparatus for disk jockeys to store, handle and play pieces of music in succession includes means for receiving and storing the desired pieces of music in digital form, means for the digital/analogue conversion of the selected pieces of music to play/listen to them, and means for allowing the disk jockey to change manually the rhythm of the pieces of music to be played in real time.

## Description

The present invention relates to the professional playing of records and particularly is directed to the personnel of discos, dance-halls and restaurants, where there is the problem of having a lot of records available, as well as professionals so-called disk jockeys working in discos and private broadcasting companies with the need of being always ready to transmit pieces of music by request or jingles without solution of continuity.
In order to meet such requirements the disk jockeys should resort to expensive, sophisticated, cumbersome apparatus including juke-box of large playing capacity that does not allow a personalized handling of the pieces of music in succession or the so-called scratching with the purpose of personalizing the played music.

The present invention aims at overcoming the problems mentioned above by providing a cheap, reliable, portable electronic apparatus using a dedicated hard-disk where it is possible to store digitally several pieces of music and to play them without the need of having the original musical supports or records.
The search of the stored pieces of music and the handling of the peripheral units described herebelow is carried out by the keyboard and the display of the apparatus. Several information relative to the stored pieces of music can be stored on the hard disk by the keyboard to facilitate its search.
The recording function provided by the apparatus makes it possible to record pieces of music both live through microphone or preamplified line connection and directly from standard playing units, such as compact disk players, tape recorders, and record players. The hard disk holding the pieces of music is located within the apparatus or in additional outside modules. The pieces of music stored in the hard disk are identified by their peculiar data which can be entered manually or, if possible, received automatically by a data source.
According to another peculiar characteristic the apparatus further includes a virtual disk which allows the disk jockeys to synchronize perfectly a listened piece of music with the following one by performing automatically the same operations (scratching) as those performed today on the records placed on the turntables of the record players located in the console.

Further features and advantages of the invention will be readily apparent from the following detailed description with reference to the accompanying drawings which show some preferred embodiments of the invention by way of a not limiting example.
In the drawings:
Fig. 1 is a first block diagram of the storing, playing apparatus;
Fig. 2 is a block diagram of a storing, playing apparatus further provided with a virtual disk;
Fig. 3 is a schematic top plan view of said virtual disk;
Figs. 3a and 3b show an enlarged detail of the ball ring on the disk and a cross section of Fig. 3, respectively;
Fig. 4 is a top plan view of a first embodiment of the apparatus provided with a record player carrying the virtual disk provided with a reading sensor.

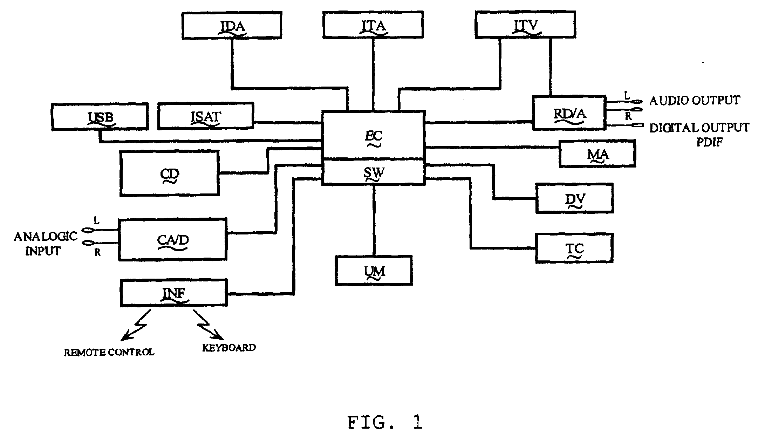

With reference to the block diagram of Figure 1, the portable apparatus for archiving, handling and listening to pieces of music according to the present invention consists essentially of a central processing unit capable of receiving and recording the desired pieces of music in digital form through a plurality of inside and outside units, and at least one playing unit capable of converting the signal from digital to analogue form in order to allow the selected pieces of music to be played/listened to.
According to a preferred embodiment the apparatus of the invention includes:
- a central processing unit EC comprising a microprocessor CPU processing and delivering data from the several inside and/or outside units by digital connections. The microprocessor executes a program for processing the digital information for the operation of the apparatus by means of settings selected on the keyboard or received from the various interfaces;
- a digital/analogue converter CA/D for storing directly from audio analogue sources (vinyl records, tapes, radio, live) and for receiving signals from a virtual disk, if any;
- a storage unit, UM: such unit stores all data relative to the pieces of music. It can be provided with different storage capacities and made by different technical solutions according to the specific applications and/or requirements. In addition to digital data for the music reproduction such unit also stores all data for the search such as author's name, title of the record, title of the piece, duration, musical genre, rhythm, situation, marks, personal comments, text of the song, music score, and disk cover. Such unit can be connected to an outside unit for increasing the storage capacity and the number of pieces of music that can be stored.
- a playing unit, RD/A: such unit receives data from the central processing unit EC and decodes the same from digital to analogue form so as to provide at its output stereo audio signals to right and left channels and digital signals in S/PDIF standard. A plurality of playing units RD/A to play several pieces of music or several passages of the same piece at the same time can be included in the apparatus. Such unit also allows position and reproduction rate of the piece of music to be controlled in order to obtain rhythm synchronization during the playing of several pieces of music at the same time as well as to carry out scratching if a virtual disk is available, as described herebelow;
- knobs MA and manual controls for selecting the piece of music and controlling position, speed, start, stop (scratching);
- a display DV: such unit displays the operations selected by control keyboard TC, the piece of music played by the playing unit along with the rhythm information (beats per minute) relative to the same piece, and data of the pieces of music stored in the storing unit (author's name, title of the record, title of the piece, duration, musical genre, rhythm, situation, marks);
- a control keyboard, TC: the keyboard controls the selection of the pieces of music to be played and other functions such as play, record, stop, pause, forward fast, back fast, jumping, and those of the plurality of outside interfaces. Data relative to the pieces of music stored in the apparatus can also be manually entered through such keyboard.

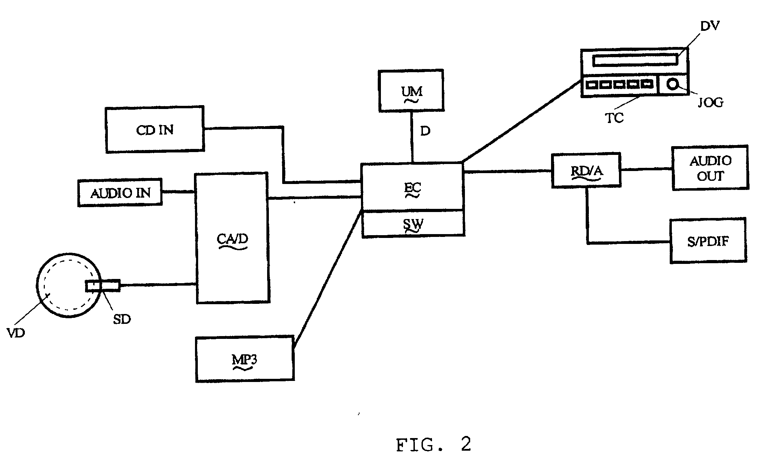

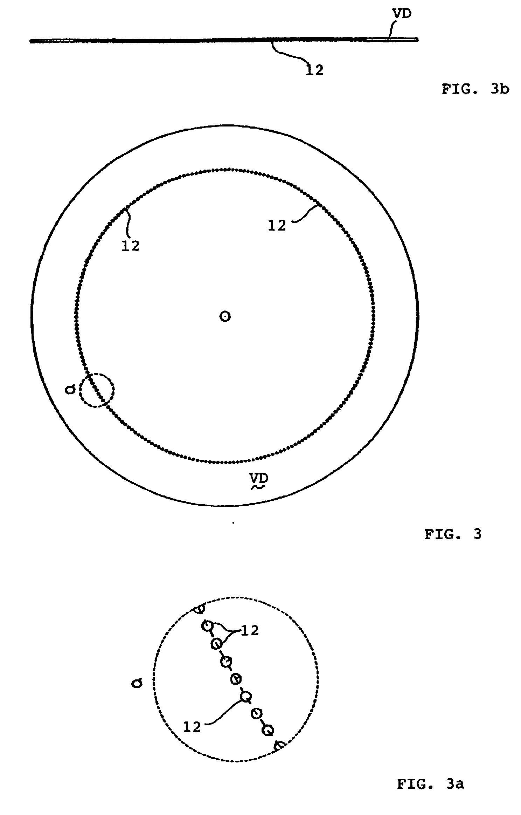

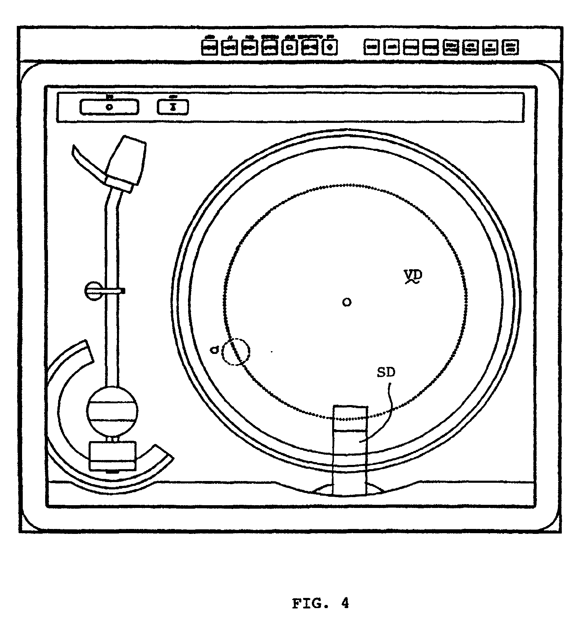

Processing unit EC can be connected directly to compact disk player CD for recording and/or playing records directly in conventional or compressed audio format as well as to the normal hi-fi apparatus to play o record pieces of music. Furthermore, the apparatus can be connected to a telephone line through modem; in such a way, it is possible to transfer and/or record the pieces of music remotely from another similar apparatus, and if it is the case to purchase and store the desired piece of music directly from the record company, record shops or commercial enterprises enabled to such selling.
The desired acoustic quality of any recorded piece of music can be provided by selecting the digital compression level applied by a compression chip MP3 by keyboard TC from a minimum, by which no quality loss is provided, to a maximum allowing up to 100.000 hours of music recorded in the digital apparatus. The compression is made by using MPEG standard.
The apparatus is further provided with several interfaces to the outside such as:
- Audio/video TV interface ITV that allows the connection of a television set for displaying all data of the pieces of music recorded in the storing unit such as author's name, title of the record, title of the piece, duration, musical genre, rhythm, situation, marks, personal comments, text of the song, music score, and disk cover. Such data can be arranged at will for providing a fast search and a list of personalized pieces of music to be played or recorded in outside pocket modules;
- Reception/transmission data interface IDA that allows the apparatus to be updated and new pieces of music to be received via telephone and/or analogue or digital communication lines;
- Digital interface for pocket cartridges ITA that allows pieces of music to be recorded in additional modules that can be used for playing them again by means of portable players, "walkman" players, car players;
- USB-interface that allows the apparatus to be directly connected to a personal computer for digital data processing/transmitting by software programs that improve the quality of the recorded pieces of music (removal of ground noise/interferences, digital mixing);
- Infrared interface INF that allows an infrared remote control unit and an outside alphanumeric keyboard to be used for entering data and/or controls manually without any additional connection;
- Satellite interface ISAT that allows the apparatus to be updated and new pieces of music to be transmitted/received via satellite.
In addition to the use of knobs MA which allow the scratching to be carried out, the invention provides, as already mentioned, the use of a virtual disk to be placed on the turntable of a common record player (see Figs 3a and 3b).
The block diagram of Fig. 2 is different from the previous diagram by the presence of a virtual disk VD which is connected to an analogue/digital converter CA/D that allows DJ to act manually, even in a digital context, on the rhythmic synchronization of the records played in succession.
As can be seen in Fig. 3, said disk VD is made of plastic material with the same dimensions as a common long playing vinyl record. A number of metal balls 12 separated from one another to form a ring with radius r lower than radius R of the disk are set within the disk. The balls are enclosed in the thickness of the disk as their diameters are lower than such thickness.
The disk is placed on the turntable of a common record player and handled as a common long playing record (L.P.), however, without using any pick-up arm. The place of the latter is taken by a directional sensor of magnetic flux SD which is integral with the record player and positioned over the disk so as to stand above the ball ring 12 at about 2 mm therefrom, as shown in Fig. 4.
By such contrivance, the analogue signals generated by sensor SD are directly correlated with the position of the disk and also include information about its speed of rotation. Such signals are converted by the analogue/digital converter CA/D into digital form for the next processing by central processing unit EC. Thus the microprocessor executes a program that quickly provides extremely precise information of position and speed by reading data provided by converter CA/D.
The software uses the information relative to position and speed of disk VD and reads digital data of the piece of music which should be actually played in storing unit UM so that a perfect synchronization with the manual operations of the disk jockey on said virtual disk VD is carried out.
The disk jockey can quickly select the pieces of music to be played by keyboard TC, display DV and knob JOG without replacing the disk.
The pieces of music are entered into the storing unit through analogue-to-digital converter that can receive the analogue stereo audio signal directly from an outside source or digitally from a compact disk or other digital interfaces.
The microprocessor is capable of controlling many input/output units at the same time for simultaneously playing several pieces of music by carrying out a rhythmic synchronization with one another.
Advantageously, the microprocessor can store a much higher number of pieces of music in the storing unit with a limited sound quality loss by using a unit of audio signal compression/decompression MP3 (MPEG LAYER III).
The portable apparatus for storing, handling and listening to pieces of music described above has a number of uses including:
a) professional apparatus for disk jockeys to be used in dance-halls, popular celebrations, discos, radio broadcasting companies, TV stations and the like.
b) Juke-box for playing/listening songs or successions of pieces of music digitally recorded in the apparatus in public halls and private rooms without using original sound supports and with the possibility of storing a list with the number of the pieces played.
c) Music file systems for reduced memory positions.

## Claims

1. An apparatus for disk jockeys to store, handle and play pieces of music in succession characterized in that there is provided means for receiving and storing the desired pieces of music in digital form, means for the digital/analogue conversion of the selected pieces of music to play/listen to them, and means for allowing the disk jockey to change manually the rhythm of the pieces of music to be played in real time.

2. An apparatus for disk jockeys to store, handle and play pieces of music in succession characterized in that it includes:
- a central processing unit comprising a microprocessor processing and delivering data from several units by digital connections;
- a software executed by said microprocessor so as to process all digital information for the operation of the apparatus by means of settings selected on the keyboard or received from the various interfaces;
- a digital/analogue converter for storing directly from audio analogue sources (vinyl records, tapes, radio, live) and for receiving signals from a virtual disk, if any;
- a storage unit where in addition to all digital data for playing music also all data for their searching and identification are stored;
- a playing unit able to receive data from the central processing unit and to decode the same from digital to analogue form so as to provide stereo audio signals to right and left channels and digital signals in S/PDIF standard;
- knobs and manual controls for selecting the piece of music and controlling position, speed, start, stop (scratching);
- a display showing the operations selected by the user through the keyboard, the piece or pieces of music played by the playing unit, and data of the pieces of music stored in the storing unit;
- a control keyboard for controlling the selection of the pieces of music to be played and other functions such as play, record, stop, pause, forward fast, back fast, jumping, and several outside interfaces.

3. The apparatus for disk jockeys to store, handle and play pieces of music in succession according to the preceding claim, characterized in that the storing unit can be connected to an outside unit to increase the storing capacity and the number of the pieces of music that can be stored.

4. The apparatus for disk jockeys to store, handle and play pieces of music in succession according to the preceding claims, characterized in that it includes a plurality of playing units for playing a plurality of pieces of music at the same time or several parts of the same piece of music.

5. The apparatus for disk jockeys to store, handle and play pieces of music in succession according to claims 1 to 4, characterized in that the playing unit is controlled by a knob capable of controlling position and speed when the piece of music is played to provide a rhythmic synchronization of a plurality of pieces of music played at the same time.

6. The apparatus for disk jockeys to store, handle and play pieces of music in succession according to the preceding claims, characterized in that data relative to the stored pieces of music can be entered into the storing unit by a keyboard.

7. The apparatus for disk jockeys to store, handle and play pieces of music in succession according to the preceding claims, characterized in that the processing unit can be connected to a compact disk player and the common hi-fi apparatus for playing or recording the pieces of music.

8. The apparatus for disk jockeys to store, handle and play pieces of music in succession according to the preceding claims, characterized in that it is provided with an audio/video interface to the television set for displaying all pieces of music stored in the storing unit.

9. The apparatus for disk jockeys to store, handle and play pieces of music in succession according to the preceding claims, characterized in that it is provided with an interface for receiving/transmitting data in order to update the system and provide new pieces of music through telephone and/or analogue or digital communication lines.

10. The apparatus for disk jockeys to store, handle and play pieces of music in succession according to the preceding claims, characterized in that it is provided with a digital interface for pocket cartridges for storing pieces of music on additional modules which can be used for playing them by means of portable players, "walkman" players, car players

11. The apparatus for disk jockeys to store, handle and play pieces of music in succession according to the preceding claims, characterized in that it is provided with an USB interface for the direct connection to a personal computer that processes/ transmits digital data by software so as to improve the quality of the recorded pieces of music (removal of ground noise/interferences, digital mixing).

12. The apparatus for disk jockeys to store, handle and play pieces of music in succession according to the preceding claims, characterized in that it is provided with an infrared interface allowing an infrared remote control unit and an outside alphanumeric keyboard to be used for entering manually data and/or controls without any additional connection via cables.

13. The apparatus for disk jockeys to store, handle and play pieces of music in succession according to the preceding claims, characterized in that it is provided with a satellite interface allowing the apparatus to be updated and new pieces of music to be transmitted/received via satellite.

14. The apparatus for disk jockeys to store, handle and play pieces of music in succession according to the preceding claims, characterized in that it is provided with a compact disk player for recording and/or playing directly from compact disk in conventional or compressed audio standard.

15. The apparatus for disk jockeys to store, handle and play pieces of music in succession according to the preceding claims, characterized in that it is provided with an analogue/digital converter for recording directly from analogue audio sources.

16. The apparatus for disk jockeys to store, handle and play pieces of music in succession according to the preceding claims, characterized in that it is further provided with a virtual disk allowing the operator to act manually, even in a digital context, on the rhythmic synchronization of the records played in succession.

17. The apparatus for disk jockeys to store, handle and play pieces of music in succession according to the preceding claims, characterized in that said virtual disk has the dimensions of a common vinyl record and is provided with means capable of transmitting analogue signals directly correlated with the position of the disk and providing information about its speed of rotation.

18. The apparatus for disk jockeys to store, handle and play pieces of music in succession according to claims 16 and 17, characterized in that said analogue signals are converted by the analogue/digital converter into digital form for the next processing by central processing unit.

19. The apparatus for disk jockeys to store, handle and play pieces of music in succession according to claims 16 to 18, characterized in that the virtual disk is made of plastic material and carries a number of metal balls (12) separated regularly from one another and set into the thickness of the disk along a concentric ring having a diameter which is lower than the disk.

20. The apparatus for disk jockeys to store, handle and play pieces of music in succession according to claims 16 to 19, characterized in that the disk is placed on the turntable of a common record player and handled as a common record, however, without using any pick-up arm, the place of which is taken by a directional sensor (SD) of magnetic flux SD which is integral with the record player and positioned over the disk so as to stand above the ball ring (12).

21. The apparatus for disk jockeys to store, handle and play pieces of music in succession according to claims 16 to 20, characterized in that the means able to transmit analogue signals is an optical means cooperating with visual bearing sensors.
